# EUROPÄISCHE PATENTSCHRIFT

(11) **EP 2 613 066 B1**
(45) Veröffentlichungstag und Bekanntmachung des Hinweises auf die Patenterteilung: **06.09.2017**
(21) Anmeldenummer: 12198944.6
(22) Anmeldetag: 21.12.2012
(51) Int. Cl.: F16D 51/18, F16D 51/48, F16D 65/22, F16C 1/26, F16D 121/14, F16D 121/24, F16D 125/62

(54) **Bremsübertrager**
Brake transmission device
Transmission de freinage

(30) Priorität: 09.01.2012 DE 202012100060 U
(43) Veröffentlichungstag der Anmeldung: 10.07.2013
(73) Patentinhaber: GA Actuation Systems GmbH, 6277 Zellberg (AT)
(72) Erfinder: Sailer, Wolfgang, 6290 Mayrhofen (AT)
(74) Vertreter: Ernicke, Klaus Stefan

(56) Entgegenhaltungen:
- DE-B3-102005 027 989
- GB-A- 602 958
- GB-A- 958 146

## Beschreibung

Die Erfindung betrifft einen Bremsübertrager mit den Merkmalen im Oberbegriff des Hauptanspruchs.

Aus der Praxis sind Radbremsen für Anhänger und deren kombinierte Betriebs- und Feststellbremse bekannt, bei denen die Kräfte und Bewegungen zur Bremsbetätigung von einem Bremsübertrager an die Radbremse übertragen werden. Der Bremsübertrager hat dabei ein bewegliches, zugfestes und biegeelastisches rundes Zugseil.

Aus der nächstliegenden GB 958 146 A ist ein Bremsübertrager mit einer Führungseinrichtung und einem darin geführten zugfesten und biegeelastischen Übertragungsmittel bekannt, wobei das Übertragungsmittel als flaches Zugband ausgebildet ist. Die Führungseinrichtung weist einen gebogenen Führungskanal auf, der im Bodenbereich von einem gebogenen Metallstreifen und im Außenbereich von einem ebenfalls gebogenen metallischen Deckstreifen gebildet ist,die einander umklammern. In diesem Führungskanal ist ein Nadellager einseitig zur Zugminderung für das Zugband angeordnet.

Die GB 602 958 A befasst sich mit einer Zug- und Druckübertragungseinrichtung, die an Bord eines Fahrzeuges, Flugzeuges oder Schiffs angeordnet ist und von einem Rohr gebildet wird, in dem ein biegeelastisches und zug- und druckfestes Band zwischen eingesetzten Rollen oder Kugeln geführt ist.

Es ist Aufgabe der vorliegenden Erfindung, einen weiterentwickelten Bremsübertrager aufzuzeigen.

Die Erfindung löst diese Aufgabe mit den Merkmalen im Hauptanspruch.
Der beanspruchte Bremsübertrager hat den Vorteil, die Kräfte und Bewegungen zur Bremsbetätigung besser und reibungsärmer übertragen und umlenken zu können. Er hat einen sehr weiten Einsatzbereich und eignet sich besonders für den Einsatz für Feststellbremsen, die separat und zusätzlich zu einer Betriebsbremse, z.B. einer hydraulischen Betriebsbremse, vorhanden sind.

Vorteilhafterweise besitzt die Führungshülse im Bereich ihres Bogens am inneren Führungskanal einseitig oder beidseitig angeordnete innere und/oder äußere Führungselemente für das Zugband. Ein äußeres Führungselement am Führungskanal kann unterbrochen sein und eine oder mehrere Ausnehmungen aufweisen. Bei einer vorteilhaften Ausführungsform ist das Zugband im Bereich eines vorderen geraden Abschnitts der Führungshülse einseitig und mit seiner Unterseite an einem Führungselement geführt.

Der beanspruchte Bremsübertrager baut sehr klein und lässt sich platzsparend an einer Radbremse, insbesondere einer Trommelbremse, montieren. Er kann durch einen Träger, z.B. einen Bremsschild, hindurch in den Bremsinnenraum ragen. Dies ermöglicht eine schräge Einführung und eine relativ schwache und widerstandsarme Umlenkung eines Übertragungselements bzw. Zugmittels.

Das Übertragungselement bzw. Zugmittel ist als Zugband ausgebildet, was Vorteile hinsichtlich der Betriebs- und Betätigungssicherheit sowie des Platzbedarfs hat. Durch die verbreiterte Bandform kann die Flächenpressung und damit der reibungsbedingte Betätigungswiderstand verringert werden. Ein breites und dünnes Zugband lässt sich außerdem bei gleicher Übertragungskapazität und Querschnittsgröße leichter biegen als ein Rundseil. Durch das dünne und breite Zugband kann auch die Führungseinrichtung des Bremsübertragers flacher bauen und hat in Montagestellung im Innenbereich der Radbremse eine kleinere Störkontur. Das flache und geringfügig gebogene Zugband unterliegt ferner weniger Verschleiss und kann auch mit relativ niedrigen Kräften betätigt werden. Dies ermöglicht die Anbindung relativ leistungsschwacher Aktoren zur Bremsbetätigung, insbesondere im Rahmen einer Feststellbremse.

Eine mehrlagige oder lamellenartige Ausbildung des Zugbands ist für eine hohe Biegeelastizität bei gleichzeitiger großer Zugfestigkeit und Belastbarkeit von besonderem Vorteil. Auch die Haltbarkeit und die Betriebssicherheit sind verbessert.

Die Führungseinrichtung des Bremsübertragers weist eine gebogene Führungshülse und ggf. einen frontseitig angeschlossenen Faltenbalg auf. Eine starre Ausbildung der Führungshülse hat Vorteile für eine exakte, platzsparende und aufwandsarme, insbesondere klemmbare, Montage an der Radbremse sowie für eine definierte und reibungsarme Führung und Umlenkung des Zugbands. Die starre Führungshülse bietet auch eine Anbaumöglichkeit für einen Aktor, der sich an der Führungshülse und dadurch mittelbar an der Radbremse abstützen kann.

Die Ausbildung der Führungseinrichtung, insbesondere der Führungshülse, aus einem geeigneten Kunststoff hat Vorteile für die reibungsarme Zugbandführung, die Temperaturfestigkeit sowie den Bau- und Kostenaufwand.

In den Unteransprüchen sind weitere vorteilhafte Ausgestaltungen der Erfindung angegeben.

Weitere vorteilhafte Ausgestaltungen sind nachfolgend genannt, die einzeln oder in beliebiger Kombination miteinander zum Einsatz kommen können.

In einem Ausführungsbeispiel hat das Zugband ein Verhältnis von Breite (b) zu Dicke (d) von größer 1. Bei einer Ausführung besitzt das Zugband eine im wesentlichen rechteckige Querschnittsform. Ein Zugband kann ferner an der Unterseite eine ebene Oberfläche aufweisen. Die Bandoberfläche an der Oberseite kann ebenfalls eben, alternativ auch uneben bzw. konturiert sein. In einer Ausführung weist das Zugband mehrere Lagen aus Metall, insbesondere aus Stahl, auf.

In einer Ausführung weist die gebogene Führungshülse einen innenliegenden gebogenen Führungskanal für das Zugband auf. Vorteilhaft ist ferner, wenn eine Führungshülse aus Kunststoff, Keramik, Stahl dgl. besteht. In einer günstigen Ausführung hat eine Führungshülse ein gebogenes flaches Führungselement für die bevorzugt vollflächige Auflage des Zugbands.

Die Erfindung ist in den Zeichnungen beispielhaft und schematisch dargestellt. Im Einzelnen zeigen:
- Figur 1:: eine perspektivische Explosionsdarstellung des Bremsübertragers und seiner Teile,
- Figur 2 und 3:: andere perspektivische Ansichten des Bremsübertragers von Figur 1,

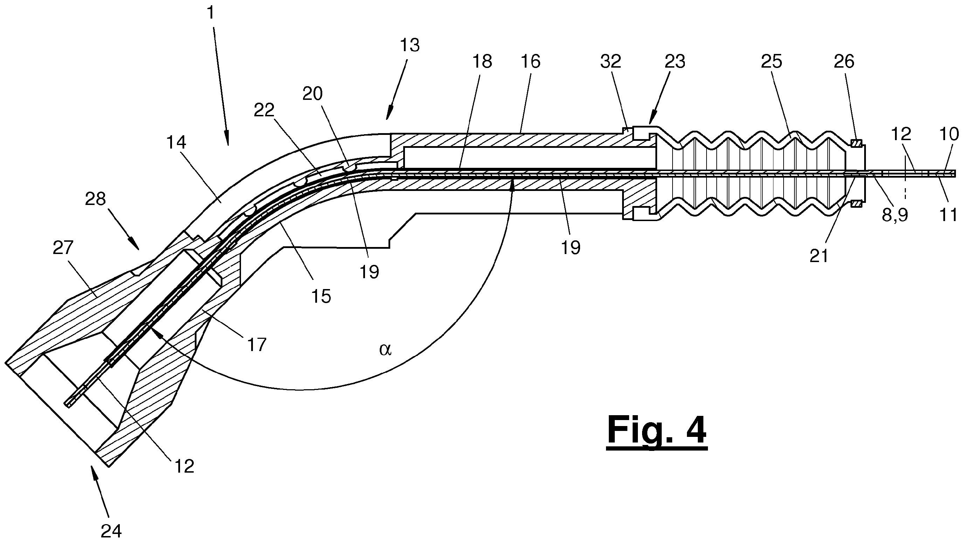

- Figur 4:: einen Längsschnitt durch den Bremsübertrager,
- Figur 5 und 6:: eine Draufsicht und eine geklappte Seitenansicht einer schematisch dargestellten Radbremse mit einem Bremsübertrager und
- Figur 7:: einen Schnitt durch die Radbremse und den Bremsübertrager gemäß Schnittlinie VII-VII von Figur 5.

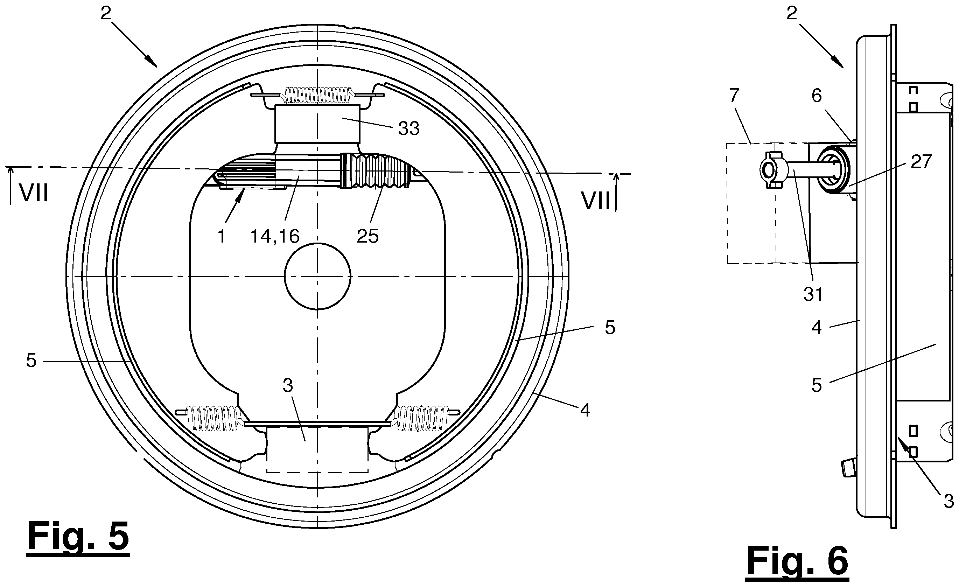

Die Erfindung betrifft einen Bremsübertrager (1) bzw. eine Übertragungseinrichtung. Der Bremsübertrager (1) dient zur Übertragung und Umlenkung von extern eingeleiteten Kräften und Wegen zur Betätigung einer Radbremse (2). Eine solche Radbremse (2) ist ebenfalls Gegenstand der Erfindung und ist beispielhaft in Figur 5 bis 7 dargestellt.

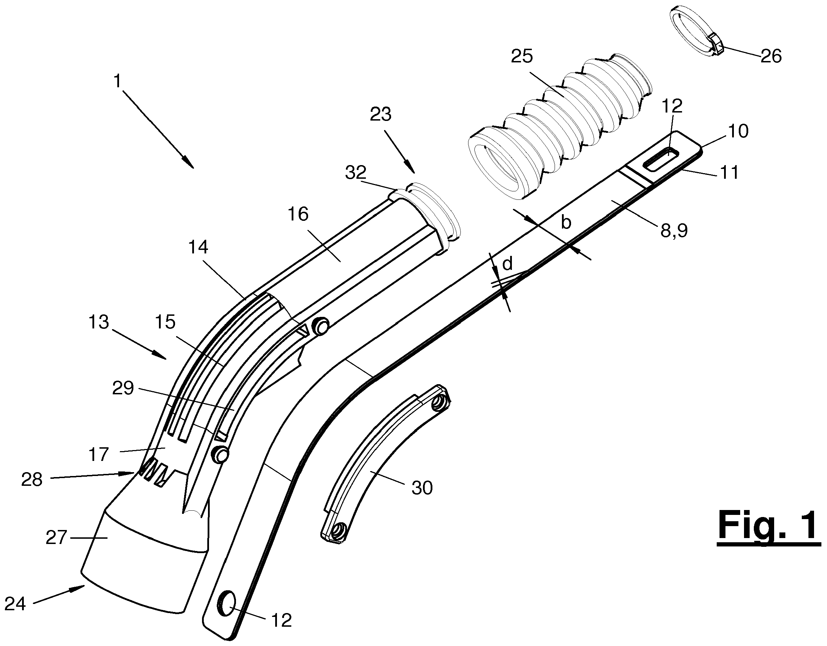

Figur 1 zeigt einen Bremsübertrager (1) und dessen Teile in perspektivischer Ansicht und in einer Explosionsdarstellung.

Der Bremsübertrager (1) weist eine gebogene Führungseinrichtung (13) und ein darin geführtes bewegliches, zugfestes und biegeelastisches Übertragungsmittel (8) auf. Die Führungseinrichtung (13) hat eine höhere Biegesteifigkeit als das Übertragungsmittel (8).

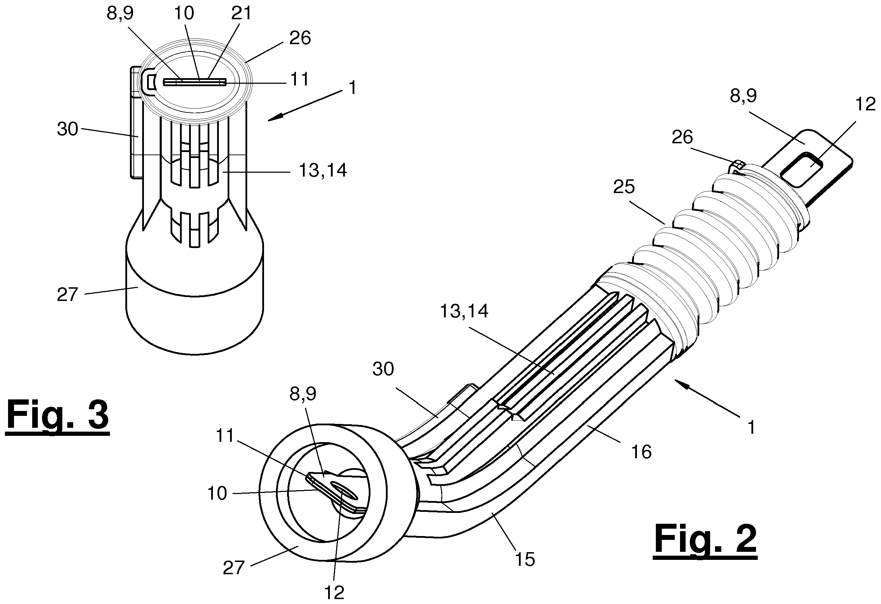

Das Übertragungs- oder Zugmittel (8) ist als flaches Zugband (9) ausgebildet. Wie Figur 1 verdeutlicht, weist das Zugband (9) ein Verhältnis seiner Breite (b) zu seiner Dicke (d) von größer 1 auf. Insbesondere ist die Breite (b) wesentlich größer als die Dicke (d). Wie Figur 3 verdeutlicht, kann das Zugband (9) eine im wesentlichen rechteckige Querschnittsform aufweisen. Das Zugband (9) weist an der Unterseite eine ebene oder glatte Oberfläche auf.

Das Zugband (9) weist in der bevorzugten Ausführungsform in der Dicke (d) mehrere dünne Schichten oder Lagen (10,11) auf. Die Lagen (10,11) können lamellenartig ausgebildet sein und haben ihrerseits eine sehr geringe Dicke. In der gezeigten Ausführungsform hat das Zugband (9) zwei Lagen (10,11). Die Lagenzahl kann alternativ größer als zwei sein, z.B. drei, vier oder mehr. Die Lagen oder Lamellen (10,11) liegen mit ihrer Breitseite aufeinander, wobei sie relativ zueinander beweglich oder unbeweglich sein können. Durch ihre kleine Dicke sind die einzelnen Lagen oder Lamellen (10,11) besonders biegeelastisch. Zugleich ist der tragende Querschnitt des Zugbandes (9) und seiner Lagen (10,11) ausreichend groß, um die zur Bremsbetätigung benötigten Kräfte übertragen zu können.

Die Lagen können fest miteinander verbunden sein, wodurch eine Relativbewegung verhindert wird. Durch eine gegenseitige Längsbeweglichkeit der Lagen (10,11) kann das Zugband (9) insgesamt eine sehr große Biegeelastizität haben.

Eine gegenseitige axiale Längsbeweglichkeit der Lagen oder Lamellen (10,11) ist für eine axiale Betätigungsbewegung und die Zugkraftübertragung des gebogenen Zugbands (9) günstig. Die Lagen oder Lamellen (10,11) können sich dadurch im Biegebereich entsprechend ihrer unterschiedlichen Biegeradien relativ zueinander bewegen. Zwischen den Lagen oder Lamellen (10,11) kann eine bewegungstolerante Verbindung, z.B. in Form von einer oder mehreren dehnelastischen Klebestellen, vorhanden sein, die trotz der Relativbeweglichkeit den Lagenverbund sichert und für eine verbesserte Handhabbarkeit des mehrlagigen Zugbands (9) sorgt. Eine bewegungstolerante Verbindung kann z.B. an einem oder an beiden Längsrändern des Zugbands (9) vorhanden sein.

Die Lagen (10,11) des Zugbands (9) können aus gleichen oder unterschiedlichen Werkstoffen bestehen. In der gezeigten Ausführungsform bestehen die Lagen oder Lamellen (10,11) aus Metall, insbesondere aus Stahl. In einer anderen Ausführungsform können die Lagen (10,11) aus einem Fasermaterial, z.B. aus Kohlefaser und/oder Glasfaser bestehen. Es ist außerdem möglich, eine Lage aus Metall und eine andere Lage aus einem Fasermaterial auszubilden. Daneben sind weitere Varianten machbar.

Wie Figur 1 verdeutlicht, weist das Zugband (9) endseitige Anschlüsse (12) für die Verbindung mit einem Bremsorgan (5) der Radbremse (2) und mit einem Aktor (7) für die Bremsbetätigung auf. Diese Anschlüsse (12) können z.B. als Durchgangsöffnungen ausgebildet sein. Alternativ sind hakenförmige Ausbildungen oder dgl. möglich.

Die gebogene Führungseinrichtung (13) kann mehrteilig ausgebildet sein. Sie weist eine gebogene Führungshülse (14) und ggf. einen Faltenbalg (25) auf, der am vorderen Ende (23) der Führungshülse (14) angeordnet, z.B. eingeclipst, ist. Die gebogene Führungshülse (14) ist starr und formstabil ausgebildet und kann ggf. durch außenseitige Längsrippen stabilisiert sein. Sie kann dadurch von außen einwirkende Kräfte aufnehmen und abstützen. Die starre Führungshülse (14) kann eine geringfügige Federelastizität haben. Dies ist günstig für eine nachfolgend erläuterte klemmende Montage an der Radbremse (2).

Die Führungshülse (14) kann aus einem geeigneten Werkstoff, insbesondere einem Kunststoff, Keramik, Stahl dgl. bestehen, der eine ausreichende Festigkeit hat und im Zusammenwirken mit dem Zugband (9) reibungsarm ist sowie den bei Radbremsen (2) ggf. auftretenden erhöhten Temperaturen standhält.

Die gebogene Führungshülse (14) kann sich in mehrere Abschnitte gliedern. Sie weist einerseits einen gebogenen Abschnitt (15) auf. Sie kann ferner ein oder mehrere, insbesondere zwei gerade Abschnitte (16,17) aufweisen, die sich einseitig oder beidseitig an den gebogenen Abschnitt (15) anschließen. In der gezeigten Ausführungsform sind beidseitige gerade Abschnitte (16,17) im Anschluss an den Bogen (15) vorgesehen. Durch die gebogene Formgebung lässt sich die Führungshülse (14) platzsparend an der Radbremse (2) montieren, wobei in Montagestellung der vordere gerade Abschnitt (16) im wesentlichen parallel zur Hauptebene eines Trägers (4) der Radbremse (2), insbesondere eines Bremsschilds einer Trommelbremse, ausgerichtet ist.

Der Biegewinkel α der Führungshülse (14) zwischen den Enden (23,24) ist bevorzugt ein stumpfer Winkel, der zwischen 90 und 180° liegt. Im gezeigten Ausführungsbeispiel beträgt er ca. 135°. Das Zugband (9) wird dementsprechend bei einer Betätigungsbewegung geringfügig umgelenkt und gebogen.

In der gezeigten Ausführungsform ist der rohrförmige Faltenbalg (25) am vorderen geraden Abschnitt (16) fluchtend montiert und kann endseitige eine ringförmige Klemme oder Schelle (26) tragen. An seinem Vorderende (23) weist der gerade Abschnitt (16) einen nach außen vorstehenden umlaufenden Bund (32) auf, der zu Montage- und Klemmzwecken dienen kann.

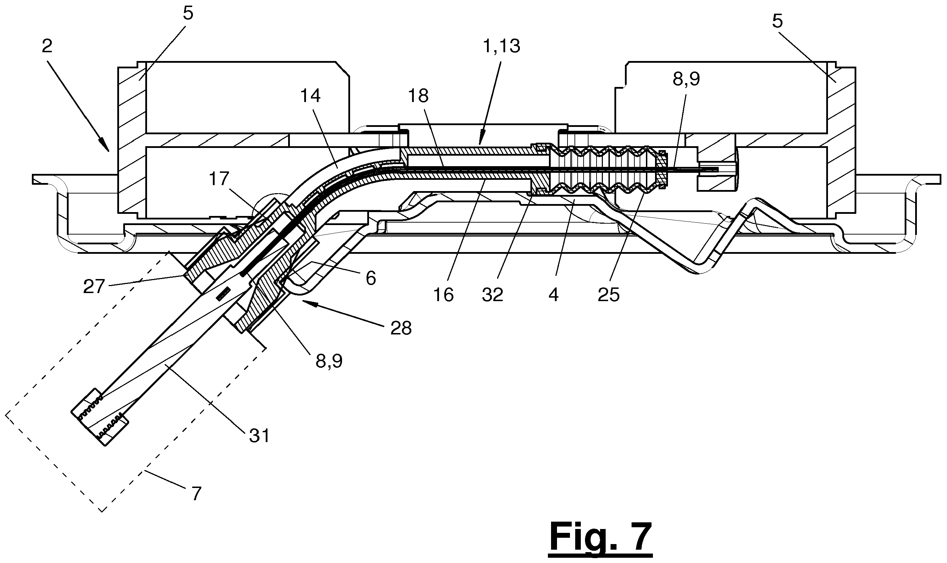

Der hintere gerade Abschnitt (17) kann eine Aufnahme (27) für den Anschluss eines Aktors (7) aufweisen. Die Aufnahme (27) ist z.B. als konische Hülse ausgebildet, die sich in Richtung zum rückwärtigen Ende (24) der Führungshülse (14) hin aufweitet. Das Zugband (9) ragt in diese innenliegende Aufnahmeöffnung und kann hier z.B. gemäß Figur 7 mit einem Verbindungsglied (31) eines Aktors (7) verbunden werden. Ein Aktor (7) kann in beliebig geeigneter Weise ausgebildet sein, z.B. als elektromotorischer Stellantrieb. Ein Aktor (7) kann an der Führungshülse (14) befestigt und abgestützt sein, insbesondere an deren rückwärtigen Ende (24).

Die Führungshülse (14) weist einen innenliegenden Führungskanal (18) für das Zugband (9) auf. Der Führungskanal (18) hat ebenfalls eine gebogene Form. Er weist an der krümmungsinneren Seite ein flaches oder wannenförmiges Führungselement (19) auf, welches sich über die gebogenen und geraden Abschnitte (15,16) erstreckt und eine ebene bzw. glatte Auflagefläche aufweist. Das Zugband (9) liegt mit seiner ebenfalls ebenen oder glatten Unterseite auf dieser Auflagefläche und wird ggf. seitlich an Wänden eines wannenförmigen Führungselements (19) geführt. Es gleitet bei der Bremsbetätigung auf dem Führungselement (19) entlang und unterliegt bereichsweise einer wandernden Biegeverformung. Durch die breitflächige Auflage wird die Flächenpressung verringert.

Der Führungskanal (18) kann einen an die Zugbandabmessungen eng angepassten geschlossenen Querschnitt aufweisen. Dies kann insbesondere im Bereich des Bogens (15) der Fall sein. Hier kann ein äußeres Führungselement (20) vorhanden sein, welches das Zugband (9) an der Biegungsaußenseite kontaktiert und führt. Das Führungselement (20) hat eine gebogene Form und kann unterbrochen sein, sodass die Führungsfunktion stellenweise vorhanden ist. Die unterbrochene Formgebung kann durch Ausnehmungen (22) oder durch vorstehende Querrippen gebildet werden. Der Führungskanal (18) kann das Zugband (9) zumindest im Bereich des Bogens (15) allseitig führen.

In anderen Bereichen der Führungshülse (14) kann die Führung für das Zugband (9) partiell sein, wobei hier nur an der Biegungsinnenseite ein Führungselement (19) vorhanden ist und eine formschlüssige äußere Führung fehlt. Der Führungskanal (18) kann hier einseitig offen oder erweitert sein. Dies kann insbesondere im geraden vorderen Abschnitt (16) der Fall sein. Eine nur stellenweise allseitige Führung des Zugbands (9) verringert den Reibungswiderstand.

Der Faltenbalg (25) kann am vorderen Ende ebenfalls ein Führungselement (21) für das Zugband (9) aufweisen. Dieses besteht z.B. aus einer Abschlussplatte mit einer an die Zugbandform angepassten Schlitzöffnung. Mit der Klemme (26) kann hier ggf. das austretende Zugband (9) am vorderen Balgende geklemmt und eingespannt sein, sodass es bei seinen Betätigungsbewegungen den Faltenbalg (25) mitnimmt und verformt.

Das hintere Ende des Zugbands (9) ist noch am rückwärtigen Ende des Bogens (15) allseitig geführt und ragt frei in die innenliegende Öffnung der Aufnahme (27) am geraden Abschnitt (17). Die Aufnahme (27) bzw. deren innenseitige Öffnung kann eine abgestufte und am Hinterende (24) sich erweiternde Formgebung aufweisen, die eine formschlüssige Montage eines Aktors (7) und die ggf. formschlüssige Führung eines Verbindungsglieds (31) in einem zylindrischen vorderen Öffnungsbereich ermöglicht.

Die Führungshülse (14) weist eine den Führungskanal (18) bildende hülsen- oder rohrförmige Wandung auf, an der ggf. außenseitig längslaufende Versteifungsrippen angeordnet sind. Eine Rippenform kann insbesondere am gebogenen Abschnitt (15) vorhanden sein. An diesem Bogen (15) kann die Führungshülse (14) ferner eine seitliche Öffnung (29) aufweisen, die am Führungskanal (18) seitlich mündet und einen Zugang zum Zugband (9) ermöglicht. Die Öffnung (29) kann mit einer abnehmbaren Dichtung (30) verschlossen werden.

Die Führungseinrichtung (13), insbesondere die Führungshülse (14) kann einen Anschluss (28) für die Montage und Lagesicherung an einer Radbremse (2) aufweisen. Eine solche Radbremse (2) ist z.B. in Form einer Trommelbremse in Figur 5 bis 7 dargestellt. Sie weist einen relativ ortsfesten Träger (4), hier z.B. einen Bremsschild, und ein oder mehrere Bremsorgane (5), hier z.B. Bremsbacken auf. Die Radbremse (2) kann eine Betätigungseinrichtung (3) aufweisen, die z.B. als hydraulische Betätigung, als mechanisches Spannschloss oder dgl. ausgebildet sein kann und auf die Bremsbacken (5) spreizend einwirkt. Die Betätigungseinrichtung (3) ist mit einem Bremspedal oder dgl. anderem Aktor verbunden und bildet mit diesem zusammen eine Betriebsbremse für ein mit mehreren solcher Radbremsen (2) ausgerüstetes Fahrzeug.

Bei der gezeigten Ausführung einer Bremse wirken die Bremsbacken (5) mit einer drehbar gelagerten Bremstrommel zusammen, die der Übersicht halber nicht dargestellt ist. Die Bremsbacken (5) sind am Träger (4) geführt und werden mit Federn zusammen gespannt. An der der Betätigungseinrichtung (3) gegenüberliegenden Seite ist eine Abstützung (33) für die gespreizten Bremsbacken (5) vorhanden. Für eine Simplexbremse kann dies eine starre Abstützung sein. Eine Servobremse kann eine bewegliche Abstützung aufweisen.

Der Bremsübertrager (1) kann zusammen mit einem Aktor (7) eine Feststellbremse bilden. Hierfür wird die Führungseinrichtung (13) durch eine schräg liegende Öffnung (6) im Träger oder Bremsschild (4) bei der Montage von außen her eingeführt und mittels der Fassung (28) am Träger (4) fixiert. Das Zugband (9) ragt am vorderen Ende aus der Führungseinrichtung (13), insbesondere dem Faltenbalg (25), und ist mit einem Bremsorgan (5) für dessen Betätigung direkt oder mittelbar verbunden.

Wie Figur 5 und 7 verdeutlichen, befinden sich der Faltenbalg (25), der gerade Abschnitt (16) und der Bogen (15) der Führungshülse (14) im Innenraum der Radbremse (2), wobei sich der gerade Abschnitt (6) und der Faltenbalg (25) parallel zur Hauptebene des Trägers (4) erstrecken. Sie können sich in einem Freiraum unter einem Quersteg der Bremsbacken (5) befinden. Der hintere gerade Abschnitt (17) befindet sich in der Öffnung (6) und kann aus dieser ein Stück nach außen vorstehen. Der Aktor (7) kann dadurch eng benachbart und schräg zur Trägerrückseite montiert werden. Der Aktor (7) wird in geeigneter Weise angesteuert und mit Energie versorgt, z.B. durch eine Signal- und Stromleitung.

Der Anschluss (28) kann in beliebig geeigneter Weise ausgebildet sein. Im gezeigten Ausführungsbeispiel ist er als Klemm- oder Spannverbindung gestaltet. Die Aufnahme (27) weist außenseitig eine Stufe oder einen Bund auf und ist formschlüssig in die Öffnung (6) oder eine dortige Spannhülse eingesteckt und hier durch Bundanlage seitlich und axial geführt. Der Bund (32) am vorderen Abschnitt (16) kann mit einem Halte- oder Rastelement an der Radbremse (2) verbunden werden, wobei er z.B. eine Raststufe an der Trägerinnenseite (4) hintergreift. Die Führungshülse (14) wird dadurch in Montagestellung eingespannt. Sie kann an auch stellenweise mit ihren Abschnitten (15,16) am Träger (4) aufliegen, wobei z.B. und der Unterseite des Bogens (15) eine Stützrippe vorgesehen ist.

Abwandlungen der gezeigten und beschriebenen Ausführungsformen sind in verschiedener Weise möglich. Die Radbremse (2) kann in anderer konstruktiver Weise ausgebildet sein. Der Bremsübertrager (1) kann in Verbindung mit einem geeigneten Aktor oder Betätiger auch zur Bildung einer Betriebsbremse eingesetzt und angeordnet werden. Die Führungshülse (14) kann einen anderen Biegewinkel α aufweisen. Das Zugband (9) kann im Querschnitt eine leicht gewölbte Form haben. Auch die Ausbildung des Anschlusses (28) kann je nach Radbremsengestaltung variieren.

### BEZUGSZEICHENLISTE

- 1: Bremsübertrager, Übertragungseinrichtung
- 2: Radbremse, Trommelbremse
- 3: Betätigungseinrichtung für Betriebsbremse
- 4: Träger, Bremsschild
- 5: Bremsorgan, Bremsbacke
- 6: Öffnung im Träger
- 7: Aktor
- 8: Übertragungsmittel, Zugmittel
- 9: Zugband
- 10: Lage
- 11: Lage
- 12: Anschluss, Öffnung
- 13: Führungseinrichtung
- 14: Führungshülse
- 15: gebogener Abschnitt, Bogen
- 16: gerader Abschnitt vorn
- 17: gerader Abschnitt hinten
- 18: Führungskanal
- 19: Führungselement
- 20: Führungselement, unterbrochen
- 21: Führungselement, Schlitz
- 22: Ausnehmung
- 23: Ende, Vorderende
- 24: Ende, Hinterende
- 25: Faltenbalg, Balg
- 26: Klemme, Schlauchklemme
- 27: Aufnahme,Aufnahmeöffnung
- 28: Anschluss
- 29: Öffnung seitlich
- 30: Dichtung
- 31: Verbindungsglied
- 32: Bund
- 33: Abstützung

- α: Biegewinkel
- b: Breite von Zugband
- d: Dicke von Zugband

## Patentansprüche

1. Bremsübertrager zur Übertragung von Bremskräften an eine Radbremse (2), insbesondere eine Trommelbremse, wobei der Bremsübertrager (1) ein bewegliches, zugfestes und biegelastisches Übertragungsmittel (8) aufweist, wobei der Bremsübertrager (1) eine gebogene Führungseinrichtung (13) und das darin geführte Übertragungsmittel (8) aufweist, wobei das Übertragungsmittel (8) als flaches Zugband (9) ausgebildet ist und die Führungseinrichtung (13) eine gebogene Führungshülse (14) mit einer starren Form aufweist, **dadurch gekennzeichnet, dass** die Führungshülse (14) im Bereich ihres Bogens (15) beidseitige innere und äußere Führungselemente (19,20) für das Zugband (9) aufweist.

2. Bremsübertrager nach Anspruch 1, **dadurch gekennzeichnet, dass** der Bremsübertrager (1) zur durchsteckbaren Montage an einem Träger (4) einer Radbremse (2), insbesondere an einem Bremsschild einer Trommelbremse, vorgesehen und ausgebildet ist.

3. Bremsübertrager nach Anspruch 1 oder 2, **dadurch gekennzeichnet, dass** die gebogene Führungseinrichtung (13) einen stumpfen Biegewinkel (α) zwischen 90° und 180°, vorzugsweise ca. 135°, aufweist.

4. Bremsübertrager nach Anspruch 1, 2 oder 3, **dadurch gekennzeichnet, dass** das Zugband (9) in der Dicke mehrere dünne Lagen (10,11) aufweist, die relativ zueinander beweglich oder unbeweglich sind.

5. Bremsübertrager nach einem der vorhergehenden Ansprüche, **dadurch gekennzeichnet, dass** eine Lage (10,11) des Zugbands (9) aus Metall, insbesondere aus Stahl, und/oder aus Kohlefaser und/oder aus Glasfaser besteht.

6. Bremsübertrager nach einem der vorhergehenden Ansprüche, **dadurch gekennzeichnet, dass** das Zugband (9) endseitige Anschlüsse (12), insbesondere Anschlussöffnungen, für die Verbindung mit einem Bremsorgan (5) und mit einem Aktor (7) aufweist.

7. Bremsübertrager nach einem der vorhergehenden Ansprüche, **dadurch gekennzeichnet, dass** die Führungseinrichtung (13) einen Faltenbalg (25) aufweist, der am vorderen Ende (23) der Führungshülse (14) angeordnet ist.

8. Bremsübertrager nach einem der vorhergehenden Ansprüche, **dadurch gekennzeichnet, dass** die Führungshülse (14) einen Bogen (15) und mindestens einen an den Bogen (15) anschließenden geraden Abschnitt (16,17) aufweist.

9. Bremsübertrager nach einem der vorhergehenden Ansprüche, **dadurch gekennzeichnet, dass** die Führungshülse (14) einen am Vorderende (23) an den Bogen (15) anschließenden geraden Abschnitt (16) aufweist, der in Montagestellung im wesentlichen parallel zur Hauptebene eines Trägers (4) einer Radbremse (2), insbesondere eines Bremsschilds einer Trommelbremse, ausgerichtet ist.

10. Bremsübertrager nach einem der vorhergehenden Ansprüche, **dadurch gekennzeichnet, dass** die Führungshülse (14) einen Anschluss (28) zur Befestigung an einem Teil der Radbremse (2), insbesondere an einem Bremsschild (4) aufweist.

11. Bremsübertrager nach einem der vorhergehenden Ansprüche, **dadurch gekennzeichnet, dass** die Führungshülse (14) aus Kunststoff besteht.

12. Bremsübertrager nach einem der vorhergehenden Ansprüche, **dadurch gekennzeichnet, dass** die Führungseinrichtung (13), insbesondere der Faltenbalg (25), am vorderen Ende ein schlitzartiges Führungselement (21) für das Zugband (9) aufweist.

13. Bremsübertrager nach einem der vorhergehenden Ansprüche, **dadurch gekennzeichnet, dass** die Führungshülse (14), insbesondere im Bereich des Bogens (15), am Führungskanal (18) eine seitliche Öffnung (29) mit einer Dichtung (30) aufweist.

14. Bremsübertrager nach einem der vorhergehenden Ansprüche, **dadurch gekennzeichnet, dass** die Führungshülse (14) am Hinterende (24) eine erweiterte Aufnahmeöffnung (27) für ein Verbindungsglied (31) eines Aktors (7) aufweist.

15. Radbremse (2), insbesondere Trommelbremse, mit einem Bremsübertrager (1) zur Übertragung von Bremskräften, wobei der Bremsübertrager (1) ein bewegliches, zugfestes und biegelastisches Übertragungsmittel (8) aufweist, **dadurch gekennzeichnet, dass** der Bremsübertrager (1) nach mindestens einem der Ansprüche 1 bis 14 ausgebildet ist.

## Claims

1. Brake transmitter for transmitting braking forces to a wheel brake (2), in particular a drum brake, the brake transmitter (1) having a movable, tension-resistant and resiliently flexible transmission means (8), the brake transmitter (1) having a curved guide device (13) and the transmission means (8) which is guided therein, the transmission means (8) being configured as a flat pull band (9), and the guide device (13) having a curved guide sleeve (14) with a rigid form, **characterized in that**, in the region of its curve (15), the guide sleeve (14) has inner and outer guide elements (19, 20) on both sides for the pull band (9).

2. Brake transmitter according to Claim 1, **characterized in that** the brake transmitter (1) is provided and configured for plug-through mounting on a carrier (4) of a wheel brake (2), in particular on a brake support plate of a drum brake.

3. Brake transmitter according to Claim 1 or 2, **characterized in that** the curved guide device (13) has an oblique bending angle (α) of between 90° and 180°, preferably of approximately 135°.

4. Brake transmitter according to Claim 1, 2 or 3, **characterized in that** the pull band (9) has, in the thickness direction, a plurality of thin layers (10, 11) which are movable or immovable relative to one another.

5. Brake transmitter according to one of the preceding claims, **characterized in that** a layer (10, 11) of the pull band (9) consists of metal, in particular of steel, and/or of carbon fibre and/or of glass fibre.

6. Brake transmitter according to one of the preceding claims, **characterized in that** the pull band (9) has end-side connectors (12), in particular connector openings, for connecting to a braking member (5) and to an actuator (7).

7. Brake transmitter according to one of the preceding claims, **characterized in that** the guide device (13) has a gaiter (25) which is arranged at the front end (23) of the guide sleeve (14).

8. Brake transmitter according to one of the preceding claims, **characterized in that** the guide sleeve (14) has a curve (15) and at least one straight section (16, 17) which adjoins the curve (15).

9. Brake transmitter according to one of the preceding claims, **characterized in that** the guide sleeve (14) has a straight section (16) which adjoins the curve (15) at the front end (23) and, in the assembled position, is oriented substantially parallel to the main plane of a carrier (4) of a wheel brake (2), in particular of a brake support plate of a drum brake.

10. Brake transmitter according to one of the preceding claims, **characterized in that** the guide sleeve (14) has a connector (28) for fastening to a part of the wheel brake (2), in particular to a brake support plate (4).

11. Brake transmitter according to one of the preceding claims, **characterized in that** the guide sleeve (14) consists of plastic.

12. Brake transmitter according to one of the preceding claims, **characterized in that**, at the front end, the guide device (13), in particular the gaiter (25), has a slot-like guide element (21) for the pull band (9).

13. Brake transmitter according to one of the preceding claims, **characterized in that**, in particular in the region of the curve (15), the guide sleeve (14) has a lateral opening (29) with a seal (30) on the guide channel (18).

14. Brake transmitter according to one of the preceding claims, **characterized in that**, at the rear end (24), the guide sleeve (14) has a widened receiving opening (27) for a connecting member (31) of an actuator (7).

15. Wheel brake (2), in particular drum brake, having a brake transmitter (1) for transmitting braking forces, the brake transmitter (1) having a movable, tension-resistant and resiliently flexible transmission means (8), **characterized in that** the brake transmitter (1) is configured according to at least one of Claims 1 to 14.

## Revendications

1. Transmission de freinage pour la transmission de forces de freinage à un frein de roue (2), en particulier un frein à tambour, dans laquelle la transmission de freinage (1) présente un moyen de transmission mobile, résistant à la traction et élastique en flexion (8), dans laquelle la transmission de freinage (1) présente un dispositif de guidage courbe (13) et le moyen de transmission (8) guidé dans celui-ci, dans laquelle le moyen de transmission (8) est réalisé en forme de bande de traction plate (9) et le dispositif de guidage (13) présente une gaine de guidage courbe (14) de forme rigide, **caractérisée en ce que** la gaine de guidage (14) présente dans la région de sa courbe (15) des éléments de guidage intérieurs et extérieurs (19, 20) de part et d'autre pour la bande de traction (9).

2. Transmission de freinage selon la revendication 1, **caractérisée en ce que** la transmission de freinage (1) est prévue et réalisée en vue du montage par insertion sur un support (4) d'un frein de roue (2), en particulier sur un disque de fixation d'un frein à tambour.

3. Transmission de freinage selon la revendication 1 ou 2, **caractérisée en ce que** le dispositif de guidage courbe (13) présente un angle de courbure obtus (α) compris entre 90° et 180°, de préférence d'environ 135°.

4. Transmission de freinage selon la revendication 1, 2 ou 3, **caractérisée en ce que** la bande de traction (9) présente selon l'épaisseur plusieurs couches minces (10, 11), qui sont mobiles ou immobiles l'une par rapport à l'autre.

5. Transmission de freinage selon l'une quelconque des revendications précédentes, **caractérisée en ce qu'**une couche (10, 11) de la bande de traction (9) se compose de métal, en particulier d'acier, et/ou de fibres de carbone et/ou de fibres de verre.

6. Transmission de freinage selon l'une quelconque des revendications précédentes, **caractérisée en ce que** la bande de traction (9) présente des raccords d'extrémité (12), en particulier des ouvertures de raccordement, pour la liaison avec un organe de freinage (5) et avec un actionneur (7).

7. Transmission de freinage selon l'une quelconque des revendications précédentes, **caractérisée en ce que** le dispositif de guidage (13) présente un soufflet pliant (25), qui est disposé sur l'extrémité avant (23) de la gaine de guidage (14).

8. Transmission de freinage selon l'une quelconque des revendications précédentes, **caractérisée en ce que** la gaine de guidage (14) présente une courbe (15) et au moins une partie droite (16, 17) se raccordant à la courbe (15).

9. Transmission de freinage selon l'une quelconque des revendications précédentes, **caractérisée en ce que** la gaine de guidage (14) présente une partie droite (16) se raccordant à l'extrémité avant (23) à la courbe (15), et qui en position de montage est orientée essentiellement parallèlement au plan principal d'un support (4) d'un frein de roue (2), en particulier d'un disque de fixation d'un frein à tambour.

10. Transmission de freinage selon l'une quelconque des revendications précédentes, **caractérisée en ce que** la gaine de guidage (14) présente un raccord (28) pour la fixation à une partie du frein de roue (2), en particulier à un disque de fixation (4).

11. Transmission de freinage selon l'une quelconque des revendications précédentes, **caractérisée en ce que** la gaine de guidage (14) se compose de matière plastique.

12. Transmission de freinage selon l'une quelconque des revendications précédentes, **caractérisée en ce que** le dispositif de guidage (13), en particulier le soufflet pliant (25), présente à l'extrémité avant un élément de guidage en forme de fente (21) pour la bande de traction (9).

13. Transmission de freinage selon l'une quelconque des revendications précédentes, **caractérisée en ce que** la gaine de guidage (14) présente, en particulier dans la région de la courbe (15), sur le canal de guidage (18) une ouverture latérale (29) avec un joint d'étanchéité (30).

14. Transmission de freinage selon l'une quelconque des revendications précédentes, **caractérisée en ce que** la gaine de guidage (14) présente à l'extrémité arrière (24) une ouverture de réception élargie (27) pour un organe de liaison (31) d'un actionneur (7).

15. Frein de roue (2), en particulier frein à tambour, avec une transmission de freinage (1) pour la transmission de forces de freinage, dans laquelle la transmission de freinage (1) présente un moyen de transmission mobile, résistant à la traction et élastique en flexion (8), **caractérisée en ce que** la transmission de freinage (1) est réalisée selon l'une quelconque des revendications 1 à 14.
